# EUROPEAN PATENT SPECIFICATION

(11) **EP 2 217 077 B1**
(45) Date of publication and mention of the grant of the patent: **11.12.2019**
(21) Application number: 08838999.4
(22) Date of filing: 20.10.2008
(51) Int. Cl.: A21D 2/02, A21D 10/00

(54) **A METHOD OF PREPARING A LOW SODIUM FLOUR-BASED DOUGH WITH IMPROVED HANDLING PROPERTIES**
VERFAHREN ZUR HERSTELLUNG EINES TEIGS AUF MEHLBASIS MIT GERINGEM NATRIUMANTEIL UND VERBESSERTER HANDHABBARKEIT
PROCÉDÉ POUR LA PRÉPARATION DE PÂTE À BASE DE FARINE À FAIBLE TENEUR EN SODIUM DOTÉE DE PROPRIÉTÉS DE MANIPULATION AMÉLIORÉES

(30) Priority: 18.10.2007 EP 07118792
(43) Date of publication of application: 18.08.2010
(73) Proprietor: CSM Bakery Solutions Europe Holding B.V., 1019 GM Amsterdam (NL)
(72) Inventor: MORRANT, Christopher John, Bromborough CH62 3NU (GB); KASZUBA, Deborah, Mary, Bromborough CH62 3NU (GB)
(74) Representative: Nederlandsch Octrooibureau
(86) International application number: PCT/NL2008/050659
(87) International publication number: WO 2009/051487

(56) References cited:
- GB-A- 452 483
- GB-A- 2 416 981
- GB-A- 191 102 778
- US-A- 2 992 922

## Description

### TECHNICAL FIELD OF THE INVENTION

The present invention provides a method of preparing a low sodium flour-based dough with improved handling properties.

Flour-based dough containing reduced levels of sodium can be very sticky and lacking in dough strength, making it difficult or even impossible to handle such dough in bakery equipment. Low sodium dough prepared by the present method ameliorates these defects.

### BACKGROUND OF THE INVENTION

In the human diet salt (sodium chloride) is the main source of sodium. Sodium is essential for life and for good health. It is a mineral that the body cannot manufacture itself so it must be supplied by food. Sodium is readily available from various sources: foods that contain sodium naturally, foods containing salt and other sodium-containing ingredients, and from salt added to foods during cooking and at the table.

As a component of salt, sodium's most recognised role is to make foods more flavourful. Less well-known, yet important roles of sodium-containing ingredients include helping to preserve foods, improving the texture of foods, and ensuring the safety of some foods.

Compared to other minerals, the human body needs sodium in relatively large amounts. Yet, much of the world's population consumes more than the body's minimum requirement for sodium. In some individuals, research suggests a link between high sodium and salt intake and high blood pressure, a major risk factor for heart disease, stroke, and kidney disease. Regulating sodium intake is also believed to be important in preventing and treating other health conditions.

According to the Institute of Medicine (Washington, USA), the daily amount of sodium sufficient to meet the needs of most healthy people, is 1.5 grams per day (3.8 grams of salt) for 19- to 50-year-olds with normal blood pressure. This amount is less than half of the estimated 3.2 grams per day consumed on average by individuals in the United States. The Institute of Medicine also suggests a maximum level for daily sodium consumption, known as the Tolerable Upper Intake Level. For healthy individuals through the age of 50 years, the Tolerable Upper Intake Level is 2.3 grams per day (5.8 grams of salt).

In many countries bread is a staple food product that is consumed in considerable quantities. In the UK a slice of white bread typically contains 0.2 g of sodium. Thus, bread can make a very significant contribution to the total sodium intake of individuals. In the UK where the average person eats the equivalent of 5 slices of bread a day, the sodium intake associated with this bread consumption equates to around 40% of the aforementioned Tolerable Upper Intake Level.

In order to reduce the sodium intake of individuals who tend to consume too much sodium and in order to help individuals who are on a low sodium diet, it would be beneficial to substantially reduce the level of sodium in bread. The sodium level in bread can be lowered by adding less salt to the dough. However, it is found that the properties of the dough are adversely affected by salt reduction. If no salt is added to an ordinary bread dough, the dough will become very sticky and weak, making it very difficult to work and shape the dough.

Consequently, there is a need for a method that enables the preparation of a low sodium flour based dough that can be processed easily in the bakery and that will yield a good quality bread.

### SUMMARY OF THE INVENTION

The inventors have unexpectedly discovered that the aforementioned objective can be realised by replacing at least a part of the sodium chloride used in the preparation of a dough by a sulphate compound (e.g a sulphate salt or sulphuric acid).

Thus, one aspect of the present invention relates to the use of a sulphate compound to improve dough strength and/or to decrease dough stickiness of low sodium flour-based dough, wherein the dough contains not more than 0.6% of sodium by weight of cereal ingredients selected from the group consisting of flour, whole grains, grain components and mixtures thereof, said use comprising combining flour, water, a sulphate compound and optionally one or more other bakery ingredients including sodium chloride, said use being characterized in that (i) the sulphate compound is incorporated in the dough in a concentration of 0.5-75 mmole per kg of flour, with the proviso that if the sulphate compound is not calcium sulphate, said sulphate component is incorporated in the dough in a concentration of at least 5 mmole per kg of flour and with the proviso that if the sulphate compound is calcium sulphate and if said calcium sulphate is incorporated in a concentration of less than 5 mmole per kg of flour, the method additionally comprises the addition of at least 0.1 mmole of an edible acid per kg of flour; and in that (ii) sodium chloride is incorporated in a concentration of 0-1.6% by weight of cereal ingredients selected from the group consisting of flour, whole grains, grain components and mixtures thereof.

Another aspect of the invention concerns a method of preparing a low sodium flour based dough being a dough which contains not more than 0.6% of sodium by weight of cereal ingredients selected from the group consisting of flour, whole grains, grain components and mixtures thereof, said method comprising combining flour, water, a sulphate compound and optionally one or more other bakery ingredients including sodium chloride, said method being characterized in that (i) the sulphate compound is incorporated in the dough in a concentration of 0.5-75 mmole per kg of flour, with the proviso that if the sulphate compound is not calcium sulphate, said sulphate component is incorporated in the dough in a concentration of at least 5 mmole per kg of flour and with the proviso that if the sulphate compound is calcium sulphate and if said calcium sulphate is incorporated in a concentration of less than 5 mmole per kg of flour, the method additionally comprises the addition of at least 0.1 mmole of an edible acid per kg of flour; and in that (ii) sodium chloride is incorporated in a concentration of 0-1.6% by weight of cereal ingredients.

The use of calcium sulphate in flour-based dough is described in US 4,436,758. This US patent describes a dough conditioner containing about 5.067 wt.% calcium sulphate and teaches to employ the dough conditioner in an amount of 0.05% to 0.0625% (baker's percentage).

GB-A 2778 describes a process of making bread which consists in incorporating with the flour or dough before baking a small quantity of a harmless salt containing loosely combined oxygen. Examples of such salts include persulphate, perborate and perphosphate.

GB-A 452,483 describes a process of making bakery products which comprises incorporation into the dough of a vanadium compound in an amount equivalent to 2-6 parts by weight and of a bromine compound in an amount of up to 50 parts by weight of flour, fermenting the dough and baking it, the resulting products having a finer, more silky texture with improved colour of crumb. The British patent describes a typical formula of a composition that can be used to introduce a vanadate compound and a bromine compound into dough. This formula also contains ammonium sulphate.

US 2,992,922 describes a method for preparing yeast-leavened baked good comprising preparing a dough by combining with flour and other dough-forming ingredients an oxidatively active composition that comprises peroxidic products and product mixtures derived by reacting methyl ethyl ketone and hydrogen peroxide. This reaction may be catalysed by hydrochloric, sulphuric or phosphoric acid.

GB-A 2 416 981 describes a method of enriching the mineral content of flour by adding to flour a premix consisting essentially of minerals including at least one source of calcium and a source of vitamin D. In the examples of the British patent application premixes containing magnesium sulphate are described.

### DETAILED DESCRIPTION OF THE INVENTION

One aspect of the present invention relates to the use of a sulphate compound to improve dough strength and/or to decrease dough stickiness of a flour-based dough containing a reduced level of sodium, wherein the dough contains not more than 0.6% of sodium by weight of cereal ingredients selected from the group consisting of flour, whole grains, grain components and mixtures thereof, said use comprising combining flour, water, a sulphate compound and optionally one or more other bakery ingredients including sodium chloride, said use being characterized in that:
- the sulphate compound is incorporated in the dough in a concentration of 0.5-75 mmole per kg of flour, with the proviso that if the sulphate compound is not calcium sulphate, said sulphate component is incorporated in the dough in a concentration of at least 5 mmole per kg of flour and with the proviso that if the sulphate compound is calcium sulphate and if said calcium sulphate is incorporated in a concentration of less than 5 mmole per kg of flour, the method additionally comprises the addition of at least 0.1 mmole of an edible acid per kg of flour;
- sodium chloride is incorporated in a concentration of 0-1.6% by weight of cereal ingredients selected from the group consisting of flour, whole grains, grain components and mixtures thereof.

The term "sulphate compound" as used herein encompasses sulphate salts as well as sulphuric acid. The sulphate salts can be both anhydrous and hydrated.

The terminology "reduced level of sodium" refers to a sodium content that is substantially lower than the sodium content usually employed in a given type of dough.

Preferably, the dough contains not more than 0.3% of sodium by weight of cereal ingredients selected from the group consisting of flour, whole grains, grain components and mixtures thereof. According to another preferred embodiment, the dough contains not more than 0.6% of sodium by weight of flour, even more preferably not more than 0.3% sodium by weight of flour.

The inventors have found that best results are obtained if not all of the sodium is removed from the dough. Consequently, in accordance with a particularly preferred embodiment, the dough contains at least 0.08%, even more preferably at least 0.12% of sodium by weight of flour.

Another aspect of the present invention relates to method of preparing a low sodium flour based dough being a dough which contains not more than 0.6% of sodium by weight of cereal ingredients selected from the group consisting of flour, whole grains, grain components and mixtures thereof, said method comprising combining flour, water, a sulphate compound and optionally one or more other bakery ingredients including sodium chloride, said method being characterized in that:
- the sulphate compound is incorporated in the dough in a concentration of 0.5-75 mmole per kg of flour, with the proviso that if the sulphate compound is not calcium sulphate, said sulphate component is incorporated in the dough in a concentration of at least 5 mmole per kg of flour and with the proviso that if the sulphate compound is calcium sulphate and if said calcium sulphate is incorporated in a concentration of less than 5 mmole per kg of flour, the method additionally comprises the addition of at least 0.1 mmole of an edible acid per kg of flour;
- sodium chloride is incorporated in a concentration of 0-1.6% by weight of cereal ingredients selected from the group consisting of flour, whole grains, grain components and mixtures thereof.

Although the inventors do not wish to be bound by theory, it is believed that beneficial effect of the sulphate compound on dough handling is correlated with the amount of dissociated sulphate that is delivered by said compound in the dough. This hypothesis is based on the observation that the advantageous effect on dough handling properties of sulphate compounds with poor water solubility, when used in limited quantities, can be enhanced by addition of an edible acid.

Calcium sulphate is an example of a poorly water-soluble sulphate salt that usually needs to be incorporated in a concentration of at least 5 mmole per kg of flour to generate a significant improvement of the dough handling properties. If however, edible acid is added, e.g. in an amount of at least 0.1 mmole per kg of flour, significantly smaller amount of calcium sulphate can be used to achieve the same effect. It will be understood that the amount of acid that is needed to achieve significant dissociation of the calcium sulphate depends on both the nature of the acid (weak or strong) and the compositions of the dough (presence of buffering components). According to a preferred embodiment, edible acid is incorporated in the dough in an amount of at least 0.2 mmole per kg of flour, more preferably of at least 0.4 mmole per kg of flour.

Examples of flour based dough in which the benefits of the present invention can be realised include bread dough, pizza dough, bun doughs, croissant dough, brioche dough, doughnut dough and Berliner dough. Preferably, the flour based dough is a bread dough, a pizza dough or a bun dough. Even more preferably, the flour based dough is a bread dough. Most preferably, the dough is a leavened bread dough containing 50-65 wt.% of flour and 30-45 wt.% of water.

Advantageously, the sulphate compound is incorporated in the dough in an amount of at least 2 mmole per kg of flour, even more preferably in an amount of at least 5 mmole per kg of flour and most preferably in an amount of at least 10 mmole per kg of flour.

Advantageously, the sulphate compound employed in accordance with the present invention is selected from the group consisting of calcium sulphate, magnesium sulphate, sodium sulphate, potassium sulphate, ammonium sulphate, sulphuric acid and combinations thereof. Even more preferably, the sulphate compound is selected from the group consisting of calcium sulphate, magnesium sulphate, potassium sulphate, ammonium sulphate and combinations thereof, calcium sulphate being most preferred.

In accordance with one preferred embodiment, the calcium sulphate is employed in a concentration of at least 5 mmole, more preferably of at least 10 mmole, most preferably of at least 20 mmole per kg of flour.

According to another preferred embodiment, the calcium sulphate is incorporated into the dough together with at least 0.1 mmole of an edible acid by weight of flour. Examples of edible acids that may suitably be employed include: citric, malic, acetic, fumaric, tartaric, phosphoric, adipic, lactic, ascorbic, sorbic, propionic, erythorbic, sulfuric and hydrochloric acids. In accordance with a particularly advantageous embodiment of the present method, calcium sulphate and edible acid are incorporated in the dough in a molar ratio of least 1:20, preferably of at least 1:10 and most preferably of at least 1:5. Typically, this molar ratio does not exceed 20:1, most preferably it does not exceed 10:1.

According to a particularly preferred embodiment, the sulphate compound is selected from the group consisting of anhydrous calcium sulphate (CaSO₄), calcium sulphate hemihydrate (CaSO₄.∼0.5H₂O), calcium sulphate dehydrate (CaSO₄.2H₂O) and combinations thereof. Most preferably the calcium sulphate employed in accordance with the present invention is (CaSO₄.2H₂O).

It will be understood that in order to achieve a low sodium content in the dough, addition of sodium chloride should be minimised. Typically, in the present method sodium chloride is added during dough preparation in a concentration of not more than 1.2%, even more preferably of not more than 1.0% and most preferably of not more than 0.75% percentage by weight of cereal ingredients selected from the group consisting of flour, whole grains, grain components and mixtures thereof,

In accordance with another embodiment, not more than 1.6%, preferably not more than 1.2%, even more preferably not more than 1.0% and most preferably not more than 0.75% by weight of flour of sodium chloride is added during dough preparation.

As explained herein before, it is advantageous not to remove all sodium from the low sodium dough. In order to ensure that the dough contains a beneficial amount of sodium, it is advantageous to add at least 0.2%, more preferably at least 0.3% of sodium chloride by weight of flour during dough preparation.

The benefits of the present invention are particularly noticeable in bakery products containing not more than limited amounts of sugar (sucrose). Accordingly, in the present method preferably not more than 8% of sucrose by weight of flour is incorporated in the dough. Even more preferably, not more than 4%, most preferably not more than 0.3% of sucrose by weight of flour is incorporated during the manufacture of the low sodium dough.

It is known in the bakery art to include gelling polymers such as alginate and pectin in dough and to incite gelation of these gelling polymers through addition of multivalent metal cations, notably calcium. The use of such gelling polymers in the present low sodium dough may not be beneficial. Accordingly, in a preferred embodiment, not more than 0.5%, even more preferably not more than 0.1% by weight of flour of a gelling polymer selected from the group consisting of alginate, pectin and combinations thereof is incorporated in the dough.

The present method is particularly suitable for preparing leavened dough. Accordingly, the present method preferably comprises the step of leavening the dough to obtain a leavened dough have a specific volume of at least 2 ml/g, even more preferably of at least 3 ml/g and most preferably of at least 4 ml/g. The dough may be leavened with the help of yeast or a chemical leavening agent. Most preferably, the present method comprises the incorporation of live yeast.

The sulphate compound employed in accordance with the present invention is preferably incorporated in the dough in the form of a particulate composition containing at least 1 wt.%, more preferably at least 5 wt.%, even more preferably at least 10 wt.% and most preferably at least 20 wt.% of the sulphate compound.

The aforementioned particulate composition preferably is a free flowing composition wherein at least 80 wt.% of the composition has a particle size within the range of 50-300 µm, even more preferably within the range of 75-150 µm.

The aforementioned particulate composition may suitably contain one or more bakery ingredients besides the sulphate compound. Examples of bakery ingredients that may advantageously be incorporated in the particulate composition include gluten, starches, cereal flours, sugars, acids, emulsifiers, fats, hydrocolloids, oxidants, reducing agents, flavouring compounds and enzyme preparations, and combinations thereof. Advantageously, the particulate composition contains at least 0.1 wt.% of one or more of the aforementioned bakery ingredients.

Yet another aspect of the present invention relates to a flour based dough obtained or obtainable by a method as described herein before.

The invention is further illustrated by means of the following examples.

### EXAMPLES

### Example 1

White bread dough was prepared according to 5 different recipes using the Chorleywood bread process. The recipes that were tested are depicted in Table 1.

**Table 1 (amounts in parts per weight)**

| | Control | A | B | C | D |
|---|---|---|---|---|---|
| White flour | 100 | 100 | 100 | 100 | 100 |
| Bread improver | 1.5 | 1.5 | 1.5 | 1.5 | 1.5 |
| NaCl | 1 | 1 | 1 | 1 | 1 |
| Yeast | 3.2 | 3.2 | 3.2 | 3.2 | 3.2 |
| Water | 59.5 | 59.5 | 57.5 | 58.3 | 59.4 |
| | | | | | |
| CaSO₄.2H₂O | | 1 | | | |
| Premix of CaSO₄.2H₂O in water (1:2) | | | 3 | | |
| Premix of CaSO₄.2H₂O in 12% vinegar (4:5) | | | | 2.25 | |
| Sulphuric acid solution (5M) | | | | | 0.1 |

The calcium sulfate (Ground Gypsum Superfine White) used in the experiments was purchased from BPB Formula, Newalk, United Kingdom. The calcium sulfate had a solubility in water at 20°C of 2.1g / litre. The particle size distribution of the calcium sulfate powder according to the specification was as follows:

| | % by weight retained |
|---|---|
| 300 µm sieve | 0.2% max |
| 150 µm sieve | 1.0% |
| 75 µm sieve | 12% |
| | |
| 86% by weight of the particles has a particle size < 75 µm | |

The handling properties of the doughs were evaluated by expert bakers. It was found that the dough handling properties of doughs A, B, C and D were clearly superior to these of the control dough. In particular it was found that the control dough was much more sticky and weaker than the other doughs. It was further observed that the use of vinegar enhanced the advantageous impact of the calcium sulphate on the dough handling properties.

### Example 2

With bread dough was made using the two different recipes depicted in Table 2.

**Table 2 (amounts in parts per weight)**

| | **Control** | **A** |
|---|---|---|
| Breadmaking Flour | 100,00 | 100,00 |
| Water | 61,00 | 61,00 |
| Yeast | 2,70 | 2,70 |
| Salt | 1,00 | 1,00 |
| CaSO₄.2H₂O | 0,00 | 1,00 |
| Diamond ® dough conditioner ^{#} | 1,25 | 1,25 |
| Vinegar (12% spirit) (as an example of an acid) | 1,25 | 1,25 |

| | | |
|---|---|---|
| ^{#} ex Bakemark, United Kingdom | | |

The dough mixes were prepared by mixing the ingredients on a Tweedy style mixer to 10 Wh/kg. The final dough temperature of 29.5 °C was achieved after approximately 170 seconds of mixing. Next, the dough was proved for 55 minutes at 45 °C and 70% relative humidity. The proved dough was subsequently baked at 200-220 °C for approximately 23 minutes to yield bread loaves having a golden brown crust.

The handling properties of the doughs were evaluated by taking 480 gram of the dough from the mix after 10 minutes rest time. Bakers assessed the adhesion of these dough pieces to their hands during handling. In addition, the consistency of the dough pieces was measured with the help of a Farinograph, using 180 seconds of mixing.

The evaluation of the manual handling showed that the addition of calcium sulphate reduced stickiness and enhances dough strength. This finding was confirmed by the Farinograph results that indicate that the use of calcium sulphate increases the consistency of the dough by 25-30 Brabender Units. The evaluation of the baked breads (appearance, taste and texture) did not show any substantial differences between the two products.

## Claims

1. Use of a sulphate compound to improve dough strength and/or to decrease dough stickiness of a flour-based dough containing a reduced level of sodium, wherein the dough contains not more than 0.6% of sodium by weight of cereal ingredients selected from the group consisting of flour, whole grains, grain components and mixtures thereof, said use comprising combining flour, water, a sulphate compound and optionally one or more other bakery ingredients including sodium chloride, said use being **characterized in that**:
• the sulphate compound is incorporated in the dough in a concentration of 0.5-75 mmole per kg of flour, with the proviso that if the sulphate compound is not calcium sulphate, said sulphate component is incorporated in the dough in a concentration of at least 5 mmole per kg of flour and with the proviso that if the sulphate compound is calcium sulphate and if said calcium sulphate is incorporated in a concentration of less than 5 mmole per kg of flour, the method additionally comprises the addition of at least 0.1 mmole of an edible acid per kg of flour;
• sodium chloride is incorporated in a concentration of 0-1.6% by weight of cereal ingredients selected from the group consisting of flour, whole grains, grain components and mixtures thereof.

2. Use according to claim 1, wherein the dough contains not more than 0.6% of sodium by weight of flour.

3. Use according to any one of the preceding claims, wherein the dough contains at least 0.12 % of sodium by weight of flour.

4. Use according to any one of the preceding claims, wherein the dough is a leavened bread dough containing 50-65 wt.% of flour and 30-45 wt.% of water.

5. Use according to any one of the preceding claims, wherein the sulphate compound is selected from the group consisting of calcium sulphate, magnesium sulphate, sodium sulphate, potassium sulphate, ammonium sulphate, sulphuric acid and combinations thereof.

6. A method of preparing a low sodium flour based dough being a dough which contains not more than 0.6% of sodium by weight of cereal ingredients selected from the group consisting of flour, whole grains, grain components and mixtures thereof, said method comprising combining flour, water, a sulphate compound and optionally one or more other bakery ingredients including sodium chloride, said method being **characterized in that**:
• the sulphate compound is incorporated in the dough in a concentration of 0.5-75 mmole per kg of flour, with the proviso that if the sulphate compound is not calcium sulphate, said sulphate component is incorporated in the dough in a concentration of at least 5 mmole per kg of flour and with the proviso that if the sulphate compound is calcium sulphate and if said calcium sulphate is incorporated in a concentration of less than 5 mmole per kg of flour, the method additionally comprises the addition of at least 0.1 mmole of an edible acid per kg of flour;
• sodium chloride is incorporated in a concentration of 0-1.6% by weight of cereal ingredients selected from the group consisting of flour, whole grains, grain components and mixtures thereof.

7. Method according to claim 6, wherein sodium chloride is added during dough preparation in a concentration of 0-1.2% by weight of cereal ingredients selected from the group consisting of floour, whole grains, grain components and mixtures thereof.

8. Method according to claim 6 or 7, wherein sodium chloride is added in a concentration of 0-1.6% by weight of flour, preferably in a concentration of 0-1.2% by weight of flour.

9. Method according to any one of claims 6-8, wherein at least 0.3% by weight of flour of sodium chloride is added during dough preparation.

10. Method according to any one of claims 6-9, wherein the sulphate compound is selected from the group consisting of calcium sulphate, magnesium sulphate, sodium sulphate, potassium sulphate, ammonium sulphate, sulphuric acid and combinations thereof.

11. Method according to any one of claims 6-10, wherein the sulphate compound is calcium sulphate.

12. Method according to claim 11, wherein the calcium sulphate is incorporated in the dough in a concentration of at least 0.5 mmole per kg of flour.

13. Method according to claim 11, wherein at least 0.1 mmole of edible acid is incorporated in the dough.

14. Method according to any one of claims 6-13, wherein the method comprises the step of leavening the dough to obtain a leavened dough have a specific volume of at least 2 ml/g.

15. Method according to any one of claims 6-14, wherein the sulphate compound is incorporated in the form of a particulate composition containing at least 5 wt.% of calcium sulphate.

16. A flour based dough obtainable by a method according to any one of claims 6-15.

## Patentansprüche

1. Verwendung einer Sulfatverbindung zum Verbessern der Teigfestigkeit und/oder zum Verringern der Teigklebrigkeit eines Teigs auf Mehlbasis, der einen verringerten Natriumanteil enthält, wobei der Teig nicht mehr als 0,6 % Natrium pro Gewicht der Getreidezutaten, ausgewählt aus der Gruppe bestehend aus Mehl, ganzen Körnern, Kornbestandteilen und Gemischen davon, enthält, wobei die Verwendung das Zusammenbringen von Mehl, Wasser, einer Sulfatverbindung und gegebenenfalls einer oder mehreren anderen Backzutaten einschließlich Natriumchlorid umfasst, wobei die Verwendung **dadurch gekennzeichnet ist, dass**:
• die Sulfatverbindung in den Teig in einer Konzentration von 0,5-75 mmol pro kg Mehl eingebracht wird, mit der Maßgabe, dass, wenn die Sulfatverbindung nicht Calciumsulfat ist, die Sulfatkomponente in den Teig in einer Konzentration von mindestens 5 mmol pro kg Mehl eingebracht wird, und mit der Maßgabe, dass, wenn die Sulfatverbindung Calciumsulfat ist und wenn das Calciumsulfat in einer Konzentration von weniger als 5 mmol pro kg Mehl eingebracht wird, das Verfahren zusätzlich die Zugabe von mindestens 0,1 mmol einer essbaren Säure pro kg Mehl umfasst;
• Natriumchlorid in einer Konzentration von 0-1,6 % pro Gewicht der Getreidezutaten, ausgewählt aus der Gruppe bestehend aus Mehl, ganzen Körnern, Kornbestandteilen und Gemischen davon, eingebracht wird.

2. Verwendung nach Anspruch 1, wobei der Teig nicht mehr als 0,6 % Natrium pro Gewicht des Mehls enthält.

3. Verwendung nach einem der vorangehenden Ansprüche, wobei der Teig mindestens 0,12 % Natrium pro Gewicht des Mehls enthält.

4. Verwendung nach einem der vorangehenden Ansprüche, wobei der Teig ein getriebener Brotteig ist, der 50-65 Gew.-% Mehl und 30-45 Gew.-% Wasser enthält.

5. Verwendung nach einem der vorangehenden Ansprüche, wobei die Sulfatverbindung ausgewählt ist aus der Gruppe bestehend aus Calciumsulfat, Magnesiumsulfat, Natriumsulfat, Kaliumsulfat, Ammoniumsulfat, Schwefelsäure und Kombinationen davon.

6. Verfahren zur Herstellung eines Teigs auf Mehlbasis mit geringem Natriumanteil, der ein Teig ist, der nicht mehr als 0,6 % Natrium pro Gewicht der Getreidezutaten, ausgewählt aus der Gruppe bestehend aus Mehl, ganzen Körnern, Kornbestandteilen und Gemischen davon, enthält, wobei das Verfahren das Zusammenbringen von Mehl, Wasser, einer Sulfatverbindung und gegebenenfalls einer oder mehreren anderen Backzutaten einschließlich Natriumchlorid umfasst, wobei das Verfahren **dadurch gekennzeichnet ist, dass**:
• die Sulfatverbindung in den Teig in einer Konzentration von 0,5-75 mmol pro kg Mehl eingebracht wird, mit der Maßgabe, dass, wenn die Sulfatverbindung nicht Calciumsulfat ist, die Sulfatkomponente in den Teig in einer Konzentration von mindestens 5 mmol pro kg Mehl eingebracht wird, und mit der Maßgabe, dass, wenn die Sulfatverbindung Calciumsulfat ist und wenn das Calciumsulfat in einer Konzentration von weniger als 5 mmol pro kg Mehl eingebracht wird, das Verfahren zusätzlich die Zugabe von mindestens 0,1 mmol einer essbaren Säure pro kg Mehl umfasst;
• Natriumchlorid in einer Konzentration von 0-1,6 % pro Gewicht der Getreidezutaten, ausgewählt aus der Gruppe bestehend aus Mehl, ganzen Körnern, Kornbestandteilen und Gemischen davon, eingebracht wird.

7. Verfahren nach Anspruch 6, wobei Natriumchlorid während der Teigzubereitung in einer Konzentration von 0-1,2 % pro Gewicht der Getreidezutaten, ausgewählt aus der Gruppe bestehend aus Mehl, ganzen Körnern, Kornbestandteilen und Gemischen davon, hinzugegeben wird.

8. Verfahren nach Anspruch 6 oder 7, wobei Natriumchlorid in einer Konzentration von 0-1,6 % pro Gewicht des Mehls, vorzugsweise in einer Konzentration von 0-1,2 % pro Gewicht des Mehls hinzugegeben wird.

9. Verfahren nach einem der Ansprüche 6-8, wobei mindestens 0,3 % Natriumchlorid pro Gewicht des Mehls während der Teigzubereitung hinzugegeben werden.

10. Verfahren nach einem der Ansprüche 6-9, wobei die Sulfatverbindung ausgewählt ist aus der Gruppe bestehend aus Calciumsulfat, Magnesiumsulfat, Natriumsulfat, Kaliumsulfat, Ammoniumsulfat, Schwefelsäure und Kombinationen davon.

11. Verfahren nach einem der Ansprüche 6-10, wobei die Sulfatverbindung Calciumsulfat ist.

12. Verfahren nach Anspruch 11, wobei das Calciumsulfat in den Teig in einer Konzentration von mindestens 0,5 mmol pro kg Mehl eingebracht wird.

13. Verfahren nach Anspruch 11, wobei mindestens 0,1 mmol einer essbaren Säure in den Teig eingebracht werden.

14. Verfahren nach einem der Ansprüche 6-13, wobei das Verfahren den Schritt des Treibenlassens des Teigs zum Erhalten eines getriebenen Teigs, der ein spezifisches Volumen von mindestens 2 ml/g aufweist, umfasst.

15. Verfahren nach einem der Ansprüche 6-14, wobei die Sulfatverbindung in Form einer teilchenförmigen Zusammensetzung, die mindestens 5 Gew.-% Calciumsulfat enthält, eingebracht wird.

16. Teig auf Mehlbasis, der durch ein Verfahren nach einem der Ansprüche 6-15 erhältlich ist.

## Revendications

1. Utilisation d'un composé sulfaté pour améliorer la résistance et/ou réduire le caractère collant d'une pâte à base de farine contenant une teneur réduite en sodium, dans laquelle la pâte ne contient pas plus de 0,6% de sodium en poids, exprimé par rapport au poids d'ingrédients à base de céréales sélectionnés dans le groupe comprenant la farine, des grains entiers, des composants céréaliers et leurs mélanges, ladite utilisation comprenant la combinaison de farine, d'eau, d'un composé sulfaté et éventuellement d'un ou plusieurs autres ingrédients de boulangerie incluant le chlorure de sodium,
ladite utilisation étant **caractérisée en ce que**:
• le composé sulfaté est incorporé dans la pâte en une proportion de 0,5 à 75 mmoles par kg de farine, à la condition que si le composé sulfaté n'est pas du sulfate de calcium, ledit composé sulfaté soit incorporé à la pâte en une proportion d'au moins 5 mmoles par kg de farine et à condition que si le composé sulfaté est du sulfate de calcium et si ledit sulfate de calcium est incorporé en une proportion inférieure à 5 mmoles par kg de farine, le procédé en outre comprend l'addition d'au moins 0,1 mmole d'un acide comestible par kg de farine;
• le chlorure de sodium est incorporé en une proportion de 0 à 1,6% en poids exprimé par rapport au poids d'ingrédients à base de céréales choisis dans le groupe comprenant la farine, des grains entiers, des composants céréaliers et leurs mélanges.

2. Utilisation selon la revendication 1, dans laquelle la pâte ne contient pas plus de 0,6% de sodium exprimé par rapport au poids de farine.

3. Utilisation selon l'une quelconque des revendications précédentes, dans laquelle la pâte contient au moins 0,12% de sodium exprimé par rapport au poids de farine.

4. Utilisation selon l'une quelconque des revendications précédentes, dans laquelle la pâte est une pâte à pain levée contenant 50 à 65% en poids de farine et 30 à 45% en poids d'eau.

5. Utilisation selon l'une quelconque des revendications précédentes, dans laquelle le composé sulfaté est choisi dans le groupe consistant en sulfate de calcium, sulfate de magnésium, sulfate de sodium, sulfate de potassium, sulfate d'ammonium, acide sulfurique et leurs combinaisons.

6. Un procédé de préparation d'une pâte à base de farine à faible teneur en sodium consistant en une pâte ne contenant pas plus de 0,6% de sodium exprimé par rapport au poids d'ingrédients à base de céréales choisis dans le groupe comprenant la farine, des grains entiers, des composants céréaliers et leurs mélanges, ledit procédé consistant à combiner de la farine, de l'eau, un composé sulfaté et éventuellement un ou plusieurs autres ingrédients de boulangerie incluant le chlorure de sodium, ledit procédé étant **caractérisé en ce que**:
• le composé sulfaté est incorporé dans la pâte en une proportion de 0,5 à 75 mmole par kg de farine, à condition que si le composé sulfaté n'est pas du sulfate de calcium, ledit composé sulfaté est incorporé dans la pâte en une proportion d'au moins 5 mmoles par kg de farine et à condition que si le composé sulfaté est du sulfate de calcium et si ledit sulfate de calcium est incorporé en une proportion inférieure à 5 mmoles par kg de farine, le procédé comprend en outre l'addition d'au moins 0,1 mmole d'un acide comestible par kg de farine;
• le chlorure de sodium est incorporé en une proportion de 0 à 1,6% en poids exprimé par rapport au poids d'ingrédients à base de céréales choisis dans le groupe comprenant la farine, des grains entiers, des composants céréaliers et leurs mélanges

7. Procédé selon la revendication 6, dans lequel on ajoute du chlorure de sodium lors de la préparation de la pâte en une proportion de 0 à 1,2% en poids d'ingrédients à base de céréales choisis dans le groupe constitué de farine, de grains entiers, de composants céréaliers et des mélanges de ceux-ci.

8. Procédé selon la revendication 6 ou 7, dans laquelle du chlorure de sodium est ajouté en une proportion de 0-1,6% en poids de farine, de préférence en une proportion de 0-1,2% en poids de farine.

9. Procédé selon l'une quelconque des revendications 6 à 8, dans lequel au moins 0,3% en poids de chlorure de sodium, exprimé par rapport au poids de farine, est ajouté lors de la préparation de la pâte.

10. Procédé selon l'une quelconque des revendications 6 à 9, dans lequel le composé sulfaté est choisi dans le groupe consistant en sulfate de calcium, sulfate de magnésium, sulfate de sodium, sulfate de potassium, sulfate d'ammonium, acide sulfurique et leurs combinaisons.

11. Procédé selon l'une quelconque des revendications 6 à 10, dans lequel le composé sulfaté est le sulfate de calcium.

12. Procédé selon la revendication 11, dans lequel le sulfate de calcium est incorporé dans la pâte en une proportion d'au moins 0,5 mmole par kg de farine.

13. Procédé selon la revendication 11, dans lequel au moins 0,1 mmole d'acide comestible est incorporé à la pâte.

14. Procédé selon l'une quelconque des revendications 6 à 13, dans lequel le procédé comprend l'étape de levée de la pâte pour obtenir une pâte levée ayant un volume spécifique d'au moins 2 ml/g.

15. Procédé selon l'une quelconque des revendications 6 à 14, dans lequel le composé sulfaté est incorporé sous la forme d'une composition particulaire contenant au moins 5% en poids de sulfate de calcium.

16. Pâte à base de farine pouvant être obtenue par un procédé selon l'une quelconque des revendications 6 à 15.
